(19) 

Europäisches
Patentamt
European
Patent Office
Office européen
des brevets

(11)     **EP 1 985 775 B1**

(12)                              **EUROPEAN PATENT SPECIFICATION**

(45) Date of publication and mention
of the grant of the patent:
**08.09.2010   Bulletin 2010/36**

(51) Int Cl.:
*E04D 1/26* (2006.01)          *E04D 5/02* (2006.01)
*C09D 175/04* (2006.01)

(21) Application number: **07008377.9**

(22) Date of filing: **25.04.2007**

(54) **Flexible top layer and roofing membrane or shingle incorporating the same**

Flexible Deckschicht und Dachmembran oder Schindel damit

Couche supérieure flexible et membrane ou bardeau de toiture l'incorporant

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**29.10.2008   Bulletin 2008/44**

(73) Proprietor: **IKO Europe
2020 Antwerpen (BE)**

(72) Inventors:
• **Coninx, Freddy
2490 Balen (BE)**

• **Bergé, Bert
3300 Tienen (BE)**

(74) Representative: **Bird, William Edward et al
Bird Goën & Co
Klein Dalenstraat 42A
3020 Winksele (BE)**

(56) References cited:
**EP-A- 0 453 598      EP-A- 1 398 409
DE-A- 3 234 261      JP-A- 2006 022 423
US-A- 5 135 813**

**Description**

FIELD OF THE INVENTION

The present invention is broadly concerned with improved bituminous roofing membranes and shingles and a method for preparing the same. In particular, the present invention relates to a flexible top layer for use as the top layer of a roofing membrane or shingle as well as a method of laying the roofing membrane or shingle.

BACKGROUND OF THE INVENTION

EP 1 398 409A discloses a prefabricated waterproof membrane comprising a support coated and preferably impregnated with a thermoplastic bituminous composition comprising (wt.%): bitumen (40-90), thermoplastic polyurethane (10-50), aromatic oil (0-10), fillers (0-50) and catalyst (0-0.5).

Bituminous roofing membranes are traditionally manufactured in a multi-step process. The main steps in this process are:

- saturating a reinforcement carrier with typically an oxidised or polymer modified bituminous material,
- building up layers of polymer modified bitumen until the coated reinforcement carrier attains the desired thickness,
- applying granules,
- applying a release film to at least one major surface of the roofing membrane,
- winding the finished membranes into a roll with desired length, and
- packaging the rolls for storage and shipment to a job site.

The reinforcement carrier is typically a support sheet made of a fabric such as polyester, fibreglass or a combination of both. This support sheet is then saturated with oxidised or polymer modified bituminous material at temperatures from 170°C to 190°C. Afterwards this saturated reinforcement carrier is coated (at the top and/or bottom) with modified bitumen layers up to a desired thickness. The modified bitumen layers can be a self-adhesive or traditional torch-on compound, well-known in the art of roofing membranes. The modified bitumen layers and materials typically contain bitumen, mineral fillers and possibly modifiers, such as thermoplastics (e.g. amorphous polypropylene (APP)), rubbers (e.g. Styrene Butadiene Styrene (SBS)), other polymers, resins, plasticizers, antioxidants etc. When the saturated carrier is coated with the desired quantity of modified bitumen, surfacing materials are adhered to the top and bottom surfaces. At the bottom surface, sand, other minerals (e.g. talc, mica), chemical release agents or polymeric films are applied. At the top surface, granules or other surfacing materials are applied. Then the membranes are cooled down rapidly by using water-cooled rolls, water sprays or a water bath. Finally, the membranes are cut to a desired length and rolled for packaging.

Bituminous roofing shingles are traditionally made in a multi-step process. The main steps in this process are:

- Saturating a reinforcement carrier (e.g. fabric such as polyester, fibreglass or a combination of both) with typically an oxidised or polymer modified bituminous material).
- Building up layers of oxidized or polymer modified bitumen until the coated reinforcement carrier attains the desired thickness.
- Embedding granules on the top side of the coated sheet.

The finished sheet is then cut into lanes and then into desired lengths for shingles.
Roof surfaces with specific aesthetic, anti-slip or heat-reflective properties are often desired.
One or more of these aspects can be achieved by on-site coating of roofs with liquid coating material, e.g. by using paint. However, this is not very cost-effective because it is a time consuming and labour intensive method. These systems also possess a limited life-time and require periodic maintenance. Another possibility is the use of single-ply roofing membranes instead of e.g. bituminous roofing membranes. Examples of single-ply are compounds of polyvinyl chloride (PVC), thermoplastic olefins (TPO) and ethylene propylenediene monomer (EPDM). Single-ply systems being limited to a single layer, they lack the security properties of multi-layer systems. Additionally, PVC ages and deteriorates relatively fast. Yet another possibility is the use of roofing membrane having an acrylic top layer. Roofing materials are placed during different weather conditions. For example Dutch regulations require a roofing membrane to have a cold flexibility as measured by standard EN 1109 (FLEXIBLE SHEETS FOR WATERPROOFING - BITUMEN SHEETS FOR ROOF WATERPROOFING DETERMINATION OF FLEXIBILITY AT LOW TEMPERATURE) of maximum -20°C.
There is therefore a need in the art for a new improved top layer for a roofing membrane that can be placed on site at low temperature. Cold resistant shingles are equally desired.
The general realisation that the ever-increasing consumption of energy, especially for cooling buildings, can negatively affect global warming has caused a change in roofing systems. More reflective top surfaces, which reflect solar radiation and reduce the absorption of energy/heat and therefore decrease the energy to cool the buildings, are promoted by governments and customers. Reflective top surfaces can be achieved by on-site coating of roofs with liquid white coating material. For instance, it has been suggested to paint the bitumen surface with aluminium paint. In addition to the disadvantages generally observed with the use of paint, aluminium paints oxidise with time and loose their reflective property. On another hand, white single-ply have been used but in addition to the inconvenience generally encountered with single-ply, additional problems arise when a white colour is wished. For instance, the attainment of white EPDM requires an amount of filler such that EPDM looses its mechanical properties and becomes stiff. The use of white acrylic top layer is yet another possibility but it suffers from the relatively high cold flexibility generally encountered for acrylic top layer in general as discussed above.

There is therefore also a need in the art for a new improved heat reflective top layer for a roofing membrane or a shingle.

SUMMARY OF THE INVENTION

An object of the present invention is to provide an improved top layer, a roofing membrane or shingle comprising the same and a method of making said top layer and said roofing membrane or shingle and/or a method of laying the roofing membrane or shingle. An advantage of the present invention is that the top layer resists temperatures down to -15°C or even lower without resulting into cracks upon deformation. In some embodiments, the top layer and roofing membranes or shingles of the present invention can be made less heat absorbing than conventional black roofing membranes and shingles and in some of these embodiments, the top layer and roofing membranes or shingles of the present invention can be made having high heat reflectivity. Broadly speaking, the invention is based on the unexpected finding that a polyurethane-containing top layer confers to a roofing membrane or shingle improved low temperature resistance and/or *in situ* applicability at low temperature provided that its Tg is inferior to -10°C. In some embodiments, this effect is achieved while simultaneously permitting the incorporation of a large amount of pigments, e.g. whitening pigment such as titanium dioxide.

In a first embodiment, the present invention relates to a top layer for a roofing membrane or shingle, said top layer comprising a first reinforcement carrier, said first reinforcement carrier being fibrous, and a paint layer. The top layer can be applied to a sealant layer such as a plastomer layer or bituminous layer, e.g. a bitumen or modified bitumen layer. The paint layer comprises between 10 and 70 %wt on a dry weight basis of a binder, wherein the binder comprises between 40 and 100%wt on a dry weight basis of a polyurethane component and between 0 and 60%wt on a dry weight basis of an acrylic polymer component and wherein the binder has a Tg < -10°C.

This is advantageous because such top layer resists temperatures down to -15°C or lower without resulting in cracking upon deformation.

Aspects of the present invention are realised by a heat-reflective roofing membrane (7) or shingle comprising a heat-reflective top layer (9) comprising: - a first reinforcement carrier (5), said first reinforcement carrier (5) being fibrous, and a paint layer (6), wherein said paint layer (6) comprises a binder, said binder being between 10 and 70 % by weight of the dry paint layer, wherein said binder comprises between 40 and 100% by weight of a polyurethane polymer component and between 0 and 60% by weight of an acrylic polymer component, wherein said binder has a Tg < -10°C when measured under the conditions of ASTM 1356, said paint layer (6) further comprises pigments, said pigments being between 5 and 70% by weight of the dry paint layer, wherein said first reinforcement carrier (5) has its top surface contacting said paint layer (6) and its bottom surface contacting a sealant layer (8); with the proviso that if said sealant layer (8) comprises a second reinforcement carrier (1) impregnated by a bituminous material said second reinforcement carrier (1) comprises a non-woven fibreglass matt, non-woven polyester mat, reinforced fibreglass mat, reinforced polyester mat, veiled scrim of various fibre combinations or laminated combinations thereof; and if said sealant layer (8) does not comprise a second reinforcement carrier (1) impregnated by a bituminous material said first reinforcement carrier (5) is composed of a reinforced scrim in combination with a non-woven fleece.

It is advantageous in some embodiments of the present invention to have a paint comprising an association of an acrylic polymer component with the polyurethane component because the acrylic polymer component permits to harden and to improve the physical resistance as well as to reduce the stickiness and the dust collecting tendency of the top layer, especially at relatively high ambient temperature.

As an additional feature, in embodiments where an acrylic component is present, the polyurethane component may form a co-polymer with the acrylic polymer component. This is advantageous because it confers a greater stability to the association between the polyurethane component and the acrylic polymer component by preventing demixing and macroscopic phase separation of the association.

As an additional feature to any of the above mentioned embodiments, the paint further comprises between 5 and 70% on a dry weight basis of a pigment or a series of pigments. This is advantageous to confer a particular colour to the coating which can either have an aesthetic effect, a heat reflective effect or both. The pigment (s) may comprise

e.g. TiO$_2$ which is a cheap and efficient heat reflecting mineral. In some embodiment, the pigment may consist in TiO$_2$.

As an additional feature, in embodiments where the paint layer comprises a pigment, the paint may be white under normal lighting conditions. This is advantageous because a white colour provides for a high light and heat reflection.

As an additional feature, the top layer is heat reflective. This is advantageous because it permits to decrease the energy to cool the buildings and therefore acts positively to reduce global warming.

As another additional feature, the top layer preferably does not crack at -15°C under the conditions of standard EN1109. Particularly preferably, the top layer does not crack at -20°C under the conditions of standard EN1109, most preferably, the top layer does not crack at -25°C under the conditions of standard EN1109. This is advantageous when the top layer is intended to be stored, placed and/or used in countries with a cold climate. Also after placement the roof membranes should be flexible and not to crack during natural movement due to e.g. wind load at low temperatures.

As another additional feature, the first reinforcement carrier is fibrous and preferably composed of a reinforced scrim in combination with a non-woven fleece. This is advantageous because the scrim provides mechanical resistance while the fleece prevents the bitumen to diffuse through the reinforcement carrier and provides support for the paint. The paint layer and the sealant layer such as a bituminous layer are locked together mechanically by the fibrous layer. This can prevent cracking of the paint layer by movement of the sealant layer, e.g. at high temperatures.

Optionally, the fleece need not be present at a selvedge of the scrim. Independently of the presence or the absence of the fleece at the selvedge of the scrim, the edge portion of the a roofing membrane according to embodiments of the present invention may be overlapped and attached to another roofing membrane and joined easily, e.g. by use of a gas torch, hot air gun or adhesive (e.g. hot melt pressure sensitive adhesive).

In another embodiment, the present invention relates to a roofing membrane or shingle comprising a top layer according to any of the embodiments and additional features described above, wherein the first reinforcement carrier has its top surface contacting the paint layer and its bottom surface contacting a sealant layer such as e.g. a bituminous layer.

As an additional feature, the sealant layer (e.g. bituminous layer) may comprise a second reinforcement carrier impregnated by a bituminous material.

As another additional feature, the first reinforcement carrier and/or the second reinforcement carrier may comprise glass fibres and/or polyester fibres. Glass fibres provide improved fire-resistance.

As another additional feature, the sealant layer (e.g. bituminous layer) may further comprise a first bitumen layer on top of the impregnated second reinforcement layer and a second bitumen layer on the bottom of the impregnated second reinforcement layer.

This is advantageous because it permits to adapt the water impermeability/cost ratio to a specific application.

As another additional feature, the bituminous material, the first bitumen layer and the second bitumen layers may each comprise between 0 and 45 %wt of a polymeric compound.

As another additional feature, the polymeric compound may comprise one or more members selected from the group consisting of synthetic polymer compounds and natural rubber. This is advantageous because it permits to improve the water impermeability and the mechanical properties of the roofing membrane.

As another additional feature, the synthetic polymer compound may comprise one or more of the following: amorphous polypropylene (APP), amorphous poly alpha olefins (APAO), thermoplastic olefins (TPO), thermoplastic elastomers (TPE), Styrene Butadiene Styrene (SBS), Styrene Ethylene Butadiene Styrene or synthetic rubber.

As another additional feature, the top layer of the roofing membrane preferably does not present cracks when tested at -10°C, more preferably - 15°C, most preferably -20°C and even most preferably -25°C under the conditions of standard EN1109. This is advantageous because this permits to store and/or place the roofing membrane in situ under very cold conditions without introducing cracks in the paint. Also after placement the roof membranes should be flexible to resist natural movement due to e.g. wind load at low temperatures without introducing cracks in the paint. Such cracks may lead to water infiltration below the paint and therefore to fungi grow, or adhesion problems.

The flexibility at low temperatures can also be expressed by the so-called glass transition temperature (Tg). This physical property is directly linked to the brittle point of the paint and can be measured by Differential Scanning Calorimetry (DSC). In the case of hybrid paint, e.g. when the binder is a blend of polymers or a copolymer, the overall Tg is calculated by the Fox Equation (see equation below)

$$\frac{1}{Tg} = \frac{w_1}{Tg_1} + \frac{w_2}{Tg_2} + ....$$

With: Tg: overall glass transition temperature in degrees Kelvin, Tg$_x$: glass transition of component x in degrees Kelvin, w$_x$: weight fraction of component x in the binder.

In some embodiments, the Tg of the top layer as measured under the conditions of standard ASTM E1356 does not exceed -10°C, preferably -15°C, more preferably -20°C, most preferably -25°C.

This is advantageous because this permits to store and or place the roofing membrane in situ under very cold conditions without introducing cracks in the paint. Also after placement, the roof membranes should be flexible to resist natural movement due to e.g. wind load at low temperatures without introducing cracks in the paint.

Such cracks may lead to water infiltration below the paint and therefore to fungus growth or adhesion problems.

In another embodiment, the present invention relates to a method of manufacturing a top layer comprising the step of applying a paint layer on a first reinforcement layer, wherein said paint layer comprises between 10 and 70 %wt on a dry weight basis of a binder, wherein the binder comprises between 40 and 100%wt on a dry weight basis of a polyurethane component and between 0 and 60%wt on a dry weight basis of an acrylic polymer component. The paint further comprises between 5 and 70%wt on a dry weight basis of a pigment such as e.g. titanium dioxide.

Aspects of the present invention are also realised by a method of manufacturing a heat-reflective top layer (9) for a roofing membrane (7) or shingle according to claim 1, said method comprising the step of applying a paint layer (6) on a first reinforcement carrier (5), said reinforcement carrier (5) being fibrous, wherein said paint layer (6) comprises a binder, said binder being between 10 and 70 % by weight of the dry paint layer, wherein said binder comprises between 40 and 100% by weight of a polyurethane component, and between 0 and 60% by weight of an acrylic polymer component and wherein the Tg of said binder is < -10°C and wherein said paint layer (6) further comprises pigments, said pigments being between 5 and 70 % by weight of the dry paint layer.

In another embodiment, the present invention relates to a method of manufacturing a roofing membrane wherein it comprises the steps of:

- applying a paint layer on a first reinforcement layer, and
- pressing the first reinforcement layer onto the surface of a sealant layer (e.g. a bituminous layer) which temperature is between 150 °C and 175 °C, wherein the paint layer comprises between 10 and 70 %wt on a dry weight basis of a binder, wherein the binder comprises between 40 and 100%wt on a dry weight basis of a polyurethane component and between 0 and 60%wt on a dry weight basis of an acrylic polymer component. The paint further comprises between 5 and 70%wt on a dry weight basis of a pigment such as e.g. titanium dioxide.

Aspects of the present invention are also realised by a method of manufacturing a heat-reflective roofing membrane (7) or shingle, comprising the method of manufacturing a heat-reflective top layer (9) of claim 11 or 12 and further comprising pressing said first reinforcement carrier (5) onto the surface of a sealant layer (8) which temperature is between 150°C and 175°C.

As an additional feature, the method of manufacturing a roofing membrane may comprise the steps of:

- applying a paint layer on a first reinforcement layer, and
- applying a sealant layer (e.g. a bituminous layer) on the other side of this first reinforcement layer

Aspects of the present invention are also realised by a method of manufacturing a roofing membrane (7) or shingle, comprising the method of manufacturing a top layer (9) of claim 10 or 11 and further comprising applying a sealant layer (8) on said first reinforcement carrier (5) of said heat-reflective top layer (9).

In another embodiment, the present invention relates to the use of a top layer, as described in any of the corresponding embodiments above, for manufacturing a roofing membrane

Aspects of the present invention are also realised by the use of a heat reflective top layer (9) comprising: a first reinforcement carrier (5), said first reinforcement carrier (5) being fibrous, and a paint layer (6), wherein said paint layer (6) comprises a binder, said binder being between 10 and 70 % by weight of the dry paint layer, wherein said binder comprises between 40 and 100% by weight of a polyurethane polymer component and between 0 and 60% by weight of an acrylic polymer component, wherein said binder has a Tg < -10°C when measured under the conditions of ASTM 1356, said paint layer (6) further comprises pigments, said pigments being between 5 and 70% by weight of the dry paint layer, for manufacturing a heat-reflective roofing membrane (7) or shingle according to claim 1.

In a further embodiment, the present invention relates to the laying of a roofing membrane described in any of the corresponding embodiments above.

BRIEF DESCRIPTION OF THE DRAWINGS

Figure 1 is an exploded view of a roofing membrane according to an embodiment of the present invention.

Figure 2 is a graph showing the glass transition temperature (as measured by DSC at 10°C/min according to ASTM 1356) for a top coating of the prior art (curve A) and for embodiments of the present invention (curves B and C).

Figure 3 is a table comparing some physical properties for roofing membranes of the prior art and for roofing membranes according to the present invention.

## DETAILED DESCRIPTION OF THE ILLUSTRATIVE EMBODIMENTS

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes. Where the term « comprising » is used in the present description and/or claims, it does not exclude the presence of other elements or steps.

Where an indefinite article is used when referring to a singular noun e.g. « a », « an » or « the », this includes a plural of that noun unless something else is specifically stated.

Furthermore, the terms first, second, third and the like in the description and/or in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In a first embodiment, the present invention relates to a top layer for a roofing membrane or shingle. The top layer of the present invention is intended to be combined with a sealant layer such as a plastomer layer, especially a bituminous layer but it can be prepared, stocked, transported or sold separately from any such layer. Once associated with a sealant layer such as a plastomer layer, especially a bituminous layer, the top layer of the present invention forms a roofing membrane or shingle. The top layer of the present invention comprises a first reinforcement carrier and a paint layer. The first reinforcement carrier can be fibrous. For instance, it can be made of a woven or non-woven fabric. Preferably, it comprises polyester fibres, fibreglass or a combination of both. Examples of usable first reinforcement carriers include but are not limited to non-woven fibreglass matt, non-woven polyester mat, reinforced fibreglass mat, reinforced polyester mat, veiled scrim of various fibre combinations or laminated combinations thereof. Most preferably, it is made of a scrim, preferably reinforced, in combination with a fleece, preferably non-woven. Preferably, the scrim is a net made of polyester, fibreglass or a combination of both. Most preferably, the scrim is made of polyester or is a combination of a glass fibre mat laminated in between polyester mats. Preferably, the fleece is a thin, plain sheet made of fibreglass, polyester or a combination of both. Most preferably, it is a combination of polyester or fibreglass. The fleece (e.g. nonwoven) has a surface density of typically 100-300 g/m$^2$. The scrim has a surface density of typically 10-100 g/m$^2$. Optionally, the fleece (e.g. nonwoven) is not present on the selvedge of the scrim.

The paint layer comprises between 10 and 70 %wt on a dry weight basis of a binder and between 5 and 70 % on a dry weight basis of a pigment such as but not limited to e.g. kaolin, calcium carbonate, titanium dioxide, iron oxide pigments, carbon black, azo, phthalocyanine, quinacridone or pyrrolopyrrole pigments, pyrene, perylene and higher rylene pigments and the likes, special effect pigments such as but not limited to metal pigments, for example, from aluminium or copper, interference pigments, such as, for example, aluminium coated with titanium dioxide, coated mica, graphite effect pigments and iron oxide laminae and the likes and combination thereof. A prefered pigment is titanium dioxide. The binder comprises between 40 and 100% on a dry weight basis of a polyurethane component and between 0 and 60% on a dry weight basis of an acrylic polymer component. In some embodiments, the paint layer comprises between 40 and 60%, preferably between 30 and 50%, more preferably between 35 and 45% on a dry weight basis of a binder. Preferably, the binder comprises between 40 and 80%wt of a polyurethane component. Preferably, the binder comprises between 20 and 60 %wt of an acrylic polymer component. Preferably the optional pigment is present in an amount between 15 and 60%, more preferably between 30 and 55% most preferably between 40 and 55% on a dry weight basis. The polyurethane component comprised in the paint may originate from a one-component system or a two-component system; it may be cured via electron beam, ultra violet radiation, heat or water; it can be dry (powder based), water-based or solvent based. The polyurethane component may comprise urethane oils, urethane alkyds, blocked isocyanates or polyisocyanate. The polyurethane component comprised in the paint preferably forms a physical or a chemical association with the optional acrylic polymer component. An example of physical association is a mixture comprising a polyurethane homopolymer, an acrylic polymer and optionally a compatibilizer such as but not limited to a block-copolymer having one block chemically compatible with (or having the same chemical nature as) the polyurethane component and another block chemically compatible with or having the same chemical nature as the acrylic polymer component. An example of chemical association is a copolymer such as a block copolymer comprising a polyurethane block and an acrylic polymer block. By acrylic polymer, it must be understood a polymer of acrylic acid, methacrylic acid, ester of those acids, or acrylonitrile. Most preferably, the binder is a co-polymer formed by the reaction of a polyurethane dispersion and an acrylate dispersion stabilised in water by means of one or more surfactants and ionic charges or the binder is an hybrid, i.e. an interpenetrated network wherein the urethane and acrylic are polymerized together as a homogeneous mixture which is dispersed as colloidal particles in water. A first example for the obtaining of a polyurethane-acrylic hybrid consists in 1) preparing a polyurethane dispersion and 2) forming an acrylic polymer in presence of the polyurethane dispersion. A second example consists in 1) forming a polyurethane prepolymer, 2) adding acrylic monomers to form a mixture, 3) disperse the mixture in water, and 4), completing concurrently the urethane and the acrylic polymerisation. Preferably, the paint contains between 5 and 35% on a dry weight basis of additives such as but not limited to fillers (e.g. lamellar fillers such as but not limited to aluminium flakes, mica or talc),anti-fungi agents, surfactants, salts, anti-foaming agents, wetting agents, flame retardant agents, water soluble binders, pigments, and dispersing agents among others. Preferably between 30 and 300 g/m2 on a dry weight basis of paint is placed on the first reinforcement combination. In some embodiments, the paint may reflect light and is preferably white under normal lighting conditions. Before drying, the paint may comprise various solvents or suspension medium such as but not limited to inorganic and organic solvents as well as polar or non-polar solvents, e.g. water, toluene, xylene, acetone, methyl isobutyl ketone, methyl ethyl ketone, methanol, ethanol, isopropanol, n-propanol, n-butanol, benzyl alcohol, methylcellosolve, ethylcellosolve, cyclohexanone, methyl acetate, n-butyl acetate, dioxane, tetrahydrofuran, chlorobenzeneethylene glycol, monoethyl ether, VM and P naptha, mineral spirits, hexane, heptane and other aliphatic, cycloaliphatic, aromatic hydrocarbons, esters, ethers and ketones and the like.

In a second embodiment of the present invention, the top layer is combined with a sealant layer such as a plastomer layer, especially a bituminous layer to form a roofing membrane (or roofing shingles if the combination is cut into lanes and then into desired lengths of shingles). The sealant layer such as a plastomer layer, especially a bituminous layer preferably comprises a second reinforcement carrier. The second reinforcement carrier can be any support but is preferably fibrous. For instance, it can be made of a woven or non-woven fabric. Preferably, it comprises polyester fibres, fibreglass or a combination of both. Examples of usable second reinforcement carriers include but are not limited to non-woven fibreglass matt, non-woven polyester mat, reinforced fibreglass mat, reinforced polyester mat, veiled scrim of various fibre combinations or laminated combinations thereof.

The second reinforcement carrier is preferably impregnated or saturated with a sealant material such as a plastomer, especially a bituminous material. The bituminous material can comprise bitumen and mineral fillers. Preferably, the bituminous material is oxidised, modified with synthetic polymer compounds or both. Preferably, the impregnated or saturated second reinforcement layer is contacting on its top and/or on its bottom one or more sealing layers, e.g. on its top and on its bottom a first and a second sealing layer such as a plastomer layer, especially a bituminen layer, respectively. The top sealing layer(s) such as the plastomer layer(s), especially the bituminen layer(s) can be the same as the bottom layer(s) or can be different, i.e. having a different thickness or composition.

Each of the bitumen materials used for the sealing layers (e.g. for a first (top) bitumen layer and a second (bottom) bitumen layer) preferably comprise between 0 and 45 %wt of a polymeric compound. The polymeric compound may comprise one or more members selected from the group consisting of synthetic polymer compounds and natural rubber. Usable synthetic polymer compounds comprise but are not limited to amorphous polypropylene (APP), amorphous poly alpha olefins (APAO), thermoplastic olefins (TPO), thermoplastic elastomers (TPE), Styrene Butadiene Styrene (SBS), Styrene Ethylene Butadiene Styrene (SEBS), synthetic rubber and the like and mixtures thereof. A release foil can be applied on the bottom of the roofing membrane. Preferably, the release foil is a siliconized polymeric foil such as but not limited to a siliconized polyester foil. Alternatively, the bottom of the roofing membrane can be covered with a polyolefinic sheet, sand or non-woven fabric. The polyolefinic sheet is preferably based on polypropylene or polyethylene having preferably a thickness comprised between 8 and 12 $\mu$m.

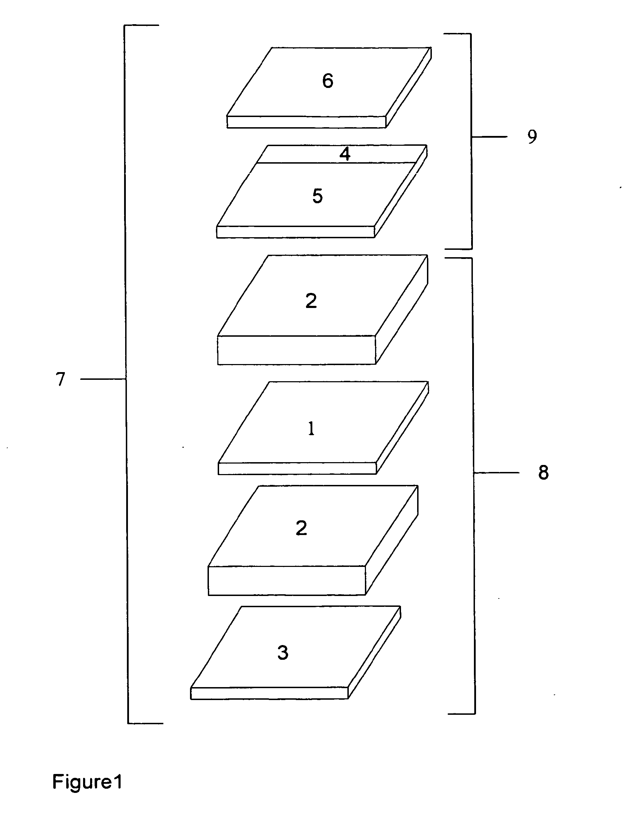

In Figure 1, a particular example of roofing membrane (7) according to an embodiment of the present invention is depicted in exploded view. A roofing membrane (7) is shown to be composed of a bituminous layer (8) and a top layer (9). The top layer (9) comprises a) a first reinforcement carrier (5) including a selvedge (4) and b) a paint layer (6). The bottom of the top layer (9) contacts a bituminous layer (8) itself composed of a second reinforcement carrier (1), impregnated with a bituminous material, on top and on the bottom of which a bitumen layer (2) is applied. The bottom-most layer (3) is in this example a siliconized foil.

The top layer is flexible and resists microbiological degradation. In some embodiments, when the top layer incorporates heat-reflective pigments, it permits the roofing membrane to reflect heat and to therefore limit heat absorption in buildings covered by the roofing membrane.

In another embodiment, the present invention relates to the use of a top layer according to any previously described embodiment to manufacture a roofing membrane.

In another embodiment, the present invention relates to a method of manufacturing a top layer comprising the step of applying a paint layer on a first reinforcement layer, wherein said paint layer comprises between 10 and 70 %on a dry weight basis of a binder and between 5 and 70 % on a dry weight basis of a pigment such as e.g. titanium dioxide. The binder comprises between 40 and 100% on a dry weight basis of a polyurethane component and between 0 and 60% on a dry weight basis of an acrylic polymer component. The paint layer can be applied either by any appropriate methods well known to the person skilled in the art such as but not limited to spraying, flooding, inking or paper transfer.

In another embodiment, the present invention relates to a method of manufacturing a roofing membrane comprising the steps of:

- applying a paint layer on a first reinforcement layer, said reinforcement layer being fibrous, and
- pressing the first reinforcement layer onto the surface of a bitumen layer which temperature is between 150 °C and 175 °C, wherein the paint layer comprises between 10 and 70 % on a dry weight basis of a binder wherein the binder comprises between 40 and 100% on a dry weight basis of a polyurethane component and between 0 and 60% on a dry weight basis of an acrylic polymer component and wherein the paint further comprises between 5 and 70 % on a dry weight basis of a pigment such as e.g. titanium dioxide. For instance, the top layer is pressed on the upper surface of the warm (150°C-175°C) sealant layer to form the upper-exposed surface of a roofing membrane. Alternatively, the sealant layer (e.g. bituminous layer) can be inked on the reinforcement layer of the top layer, e.g. by using a roll to transfer the sealant layer (e.g. bituminous layer) onto one side of the reinforcement layer.

Example 1

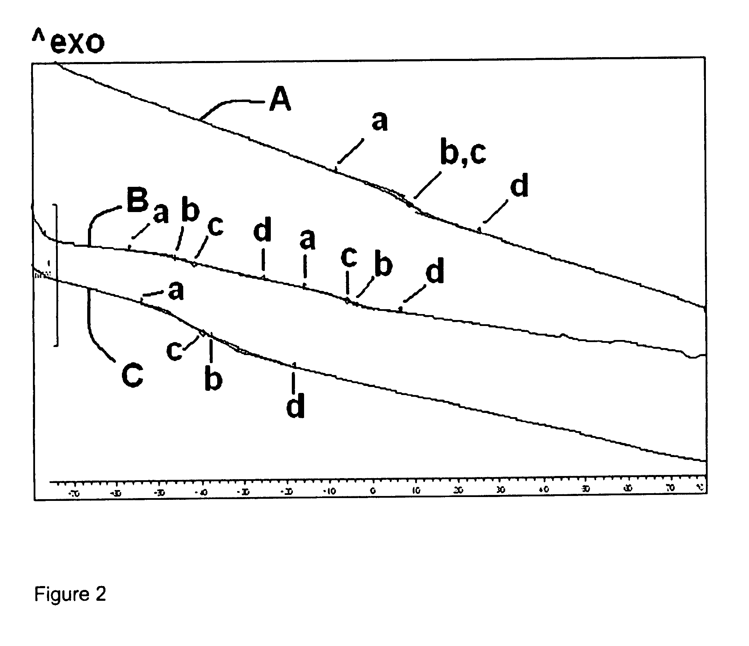

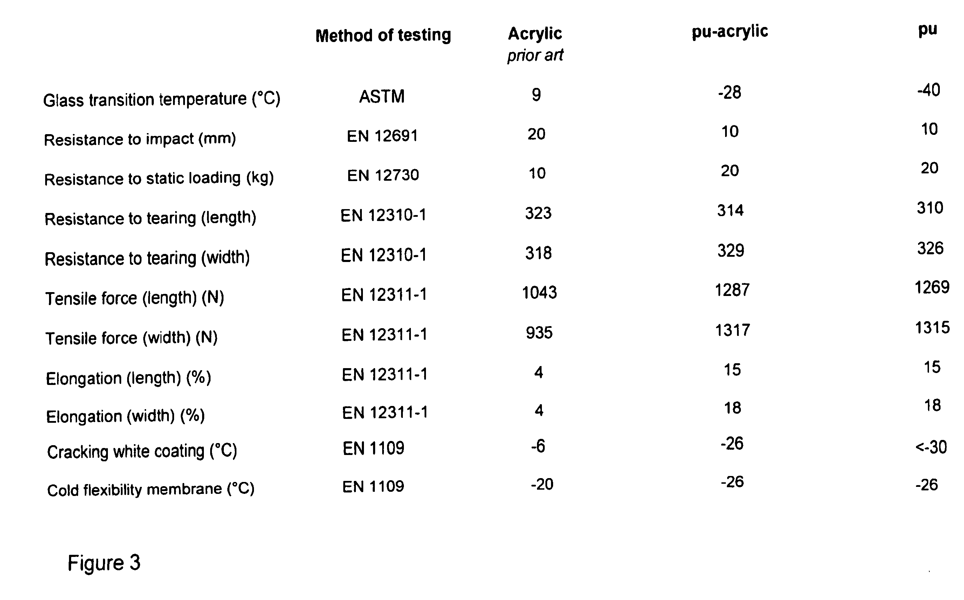

Figure 3 compares the physical properties of a commercially available reflective white acrylic based roofing membrane of the prior art (third column) and the physical properties of a heat-reflective roofing membrane according to two particular embodiments of the present invention (fourth and fifth column). In the particular embodiment of column 4, the paint contains about 40% of binder on a dry weight basis and the binder is a co-polymer obtained by the reaction of a polyurethane dispersion and a polyacrylate dispersion in water. The binder contains about 60% on a dry weight basis of the polyurethane component and about 40% on a dry weight basis of the polyacrylate component. Before deposition, the co-polymer is free of solvents and is stabilized in water by means of surfactants and ionic charges. The paint contains about 50% of titanium oxide on a dry weight basis and about 10% of additives on a dry weight basis. In the particular embodiment of column 5, the paint contains a pure solvent based alifatic polyurethane binder pigmented with titanium oxide. All mechanical properties tested for these two particular embodiments are either better or equal to the mechanical properties of the acrylic based roofing membrane of the prior art. In particular, the glass transition temperature is -28°C for the first embodiment (as calculated by the Fox equation) and -40°C for the second embodiment while the reflective layer of the prior art has a glass transition temperature of 9°C. (see Figure 2). Also, cracks in the white coating (top layer) are only observed at -26°C or below under the conditions of the standard EN1109 (in the particular embodiment of column 4) while the top layer of the prior art shows cracks already for temperatures of -6°C or below. In the particular embodiment of column 5, no cracking is observed at a temperature of -30 °C.

Figure 2 shows three DSC curves. Curve A correspond to an acrylic heat reflective paint of the prior art. It is the paint characterised on column 3 of Figure 3. Curve A shows one glass transition temperature which midpoint as calculated by the method of ASTM 1356 falls at 9°C. Curve B shows the two glass transition temperatures of the co-polymer PU/acrylic of column 4 in Figure 3 which midpoints as calculated by the method of ASTM 1356 falls respectively at - 41 °C and - 6°C for the first and second Tg respectively. This results in a global Tg as calculated by the Fox equation of - 28 °C. Curve C shows the glass transition temperature of the PU paint of column 5 in Figure 3 which midpoint as calculated by the method of ASTM 1356 falls at - 40°C. The values of the parameters used to calculate the Tg according to ASTM 1356 in each of the three curves represented in Figure 2 are summarized in table 2 below:

|  | Curve A (prior art) | Curve B |  | Curve C |
|---|---|---|---|---|
| Onset (°C) | 6.23 | -48.19 | -10.92 | -48.69 |
| Left limit a (°C) | -8.38 | -56.85 | -15.99 | -54.21 |
| Midpoint b (°C) | 9.17 | -45.83 | -3.65 | -37.86 |
| Midpoint ASTM 1356 c (°C) | 8.99 | -41.37 | -5.84 | -39.71 |
| Right limit d (°C) | 25.49 | -25.00 | 6.69 | -18.01 |
| Delta cp ASTM 1356 (*$10^{-3}$ Jg$^{-1}$K$^{-1}$) | 37.700 | 40.392 | 55.938 | 236 |

Example 2:

Table 3

| | Sunny and 27°C | Sunny and 31 °C |
|---|---|---|
| Bitumen membrane with sand | 51 °C | 54°C |
| Bitumen membrane with white PU/acrylic paint | 31°C | 34°C |
| Bitumen membrane with pure white PU paint | 31 °C | 34°C |

Table 3 above shows the temperature measured on the surface of a bituminous membrane topped, on the one hand, with sand for comparative purpose (second row of table 3) and, on the other hand, by heat reflective top layers according to the particular embodiments of the present invention of example 1 (third and fourth row of table 3). In the second column, the temperature was measured on a sunny day when the shadow temperature was 27°C. In the third column, the temperature was measured on a sunny day when the shadow temperature was 31°C. In both cases, the temperature on the heat reflecting coating according to a particular embodiment of the present invention was 20°C lower than the temperature measured at the same moment on the bituminous membrane topped with sand.

The roofing membrane of the present invention is usually installed according to the general regulations followed by the roof contractors. Depending on the surface and the roof design different application methods can be used. The membrane of the present invention can be applied as a single layer or as the capsheet of a multi-layer system. Standard application methods are hot bitumen bonded application, torch-on application, cold adhesive applied application, self adhesive application or mechanically fixed application but are not limited to these laying methods. Full bonding of the roofing membrane may be achieved by pouring hot bitumen compound onto the substrate and then unrolling the membrane into it. When the torch-on method is used full bonding may be achieved by reactivating the surface on the underside of the roofing membrane with a gas torch. Cold bonding of the roofing membrane may be achieved by applying a cold bonding agent to the substrate and then unrolling the membrane into it. Self-adhesive bonding achieves full bonding by e.g. removal of a backing release film while unrolling the membrane onto the substrate. Another application method is the so-called mechanically fastening. In this method the membrane is applied by e.g. using a stress plate and screw fastener into the substrate.

The roofing shingles according to the present invention are usually installed according to the general regulations followed by roof contractors. Different methods can be used to attach shingles to a roof. Standard application methods are mechanically fixed application, self-adhesive application or a combination of both applications but are not limited to these laying methods.

**Claims**

**1.** A heat-reflective roofing membrane (7) or shingle comprising a heat-reflective top layer (9) comprising:

- a first reinforcement carrier (5), said first reinforcement carrier (5) being fibrous, and,
- a paint layer (6), wherein said paint layer (6) comprises a binder, said binder being between 10 and 70 % by weight of the dry paint layer, wherein said binder comprises between 40 and 100% by wight of a polyurethane polymer component and between 0 and 60% by weight of an acrylic polymer component, wherein said binder has a Tg < -10°C when measured under the conditions of ASTM 1356, said paint layer (6) further comprises pigments, said pigments being between 5 and 70% by weight of the dry paint layer,

wherein said first reinforcement carrier (5) has its top surface contacting said paint layer (6) and its bottom surface contacting a sealant layer (8); with the proviso that if said sealant layer (8) comprises a second reinforcement carrier (1) impregnated by a bituminous material said second reinforcement carrier (1) comprises a non-woven fibreglass matt, non-woven polyester mat, reinforced fibreglass mat, reinforced polyester mat, veiled scrim of various fibre combinations or laminated combinations thereof; and if said sealant layer (8) does not comprise a second reinforcement carrier (1) impregnated by a bituminous material said first reinforcement carrier (5) is composed of a reinforced scrim in combination with a non-woven fleece.

**2.** The heat-reflective roofing membrane (7) or shingle according to claim 1, wherein said polyurethane polymer component forms a co-polymer with said acrylic polymer component.

**3.** The heat-reflective roofing membrane or shingle according to claim1 or 2, wherein said pigment comprises TiO$_2$.

**4.** The heat-reflective roofing membrane (7) or shingle according to any one of claims 1 to 3, wherein said first reinforcement carrier is a woven or non-woven fabric.

5. The heat-reflective roofing membrane (7) or shingle according to any one of claims 1 to 4, wherein said top layer (9) does not crack at -15°C under the conditions of standard EN1109.

6. The heat-reflective roofing membrane (7) or shingle according to any one of claims 1 to 5, wherein said first reinforcement carrier (5) and/or said second reinforcement carrier (5) comprises glass fibres and/or polyester fibres.

7. The heat-reflective roofing membrane (7) or shingle according to any one of claims 1 to 6, wherein said sealant layer (8) further comprises a first bitumen layer (2) on top of said impregnated second reinforcement layer (1) and a second bitumen layer (2) on the bottom of said impregnated second reinforcement layer (1).

8. The heat-reflective roofing membrane (7) or shingle according to claim 7, wherein said first bitumen layer (2) and said second bitumen layer (2) each comprises between 0 and 45 %wt of a polymeric compound.

9. The heat-reflective roofing membrane (7) or shingle according to claim 8, wherein said synthetic polymer compound comprises one or more members selected from the group consisting of amorphous polypropylene (APP), amorphous poly alpha olefins (APAO), thermoplastic olefins (TPO), thermoplastic elastomers (TPE), Styrene Butadiene Styrene (SBS), Styrene Ethylene Butadiene Styrene, natural rubber or synthetic rubber.

10. A method of manufacturing a heat-reflective top layer (9) for a roofing membrane (7) or shingle according to claim 1, said method comprising the step of applying a paint layer (6) on a first reinforcement carrier (5), said reinforcement carrier (5) being fibrous, wherein said paint layer (6) comprises a binder, said binder being between 10 and 70 % by weight of the dry paint layer, wherein said binder comprises between 40 and 100% by weight of a polyurethane component; and between 0 and 60% by weight of an acrylic polymer component and wherein the Tg of said binder is < -10°C and wherein said paint layer (6) further comprises pigments, said pigments being between 5 and 70 % by weight of the dry paint layer.

11. The method according to claim 10, wherein said first reinforcement carrier (5) comprises glass fibres and/or polyester fibres.

12. A method of manufacturing a heat-reflective roofing membrane (7) or shingle, comprising the method of manufacturing a heat-reflpctive top layer (9) of claim 11 or 12 and further comprising pressing said first reinforcement carrier (5) onto the surface of a sealant layer (8) which temperature is between 150°C and 175°C.

13. The method according to claim 12, wherein said sealant layer (8) further comprises a first bitumen layer (2) on top of said impregnated second reinforcement layer (1) and a second bitumen layer (2) on the bottom of said impregnated second reinforcement layer (1).

14. A method of manufacturing a roofing membrane (7) or shingle, comprising the method of manufacturing a top layer (9) of claim 10 or 11 and further comprising applying a sealant layer (8) on said first reinforcement carrier (5) of said heat-reflective top layer (9).

15. Use of a heat-reflective top layer (9) comprising:

- a first reinforcement carrier (5), said first reinforcement carrier (5) being fibrous, and,
- a paint layer (6), wherein said paint layer (6) comprises a binder, said binder being between 10 and 70 % by weight of the dry paint layer, wherein said binder comprises between, 40 and 100% by weight of a polyurethane polymer component and between 0 and 60% by weight of an acrylic polymer component, wherein said binder has a Tg < -10°C when measured under the conditions of ASTM 1356, said paint layer (6) further comprises pigments, said pigments being between 5 and 70% by weight of the dry paint layer,

for manufacturing a heat-reflective roofing membrane (7) or shingle according to claim 1.

16. Laying a heat-reflective roofing membrane (7) or shingle according to any one of claims 1 to 9.

**Patentansprüche**

1. Wärme reflektierende Dachmembran (7) oder Schindel, umfassend eine Wärme reflektierende Deckschicht (9), umfassend:

   - einen ersten Verstärkungsträger (5), wobei der erste Verstärkungsträger (5) faserig ist, und
   - eine Lackschicht (6), wobei die Lackschicht (6) ein Bindemittel umfasst, wobei das Bindemittel zwischen 10 und 70 Gewichtsprozent der trockenen Lackschicht bildet, wobei das Bindemittel zwischen 40 und 100 Gewichtsprozent einer Polyurethan-Polymerkomponente und zwischen 0 und 60 Gewichtsprozent einer Acryl-Polymerkomponente umfasst, wobei das Bindemittel eine $Tg < -10°C$ bei einer Messung unter den Bedingungen von ASTM 1356 aufweist, wobei die Lackschicht (6) des Weiteren Pigmente umfasst, wobei die Pigmente zwischen 5 und 70 Gewichtsprozent der trockenen Lackschicht bilden,

   wobei der erste Verstärkungsträger (5) an seiner oberen Oberfläche mit der Lackschicht (6) in Kontakt steht und an seiner unteren Oberfläche mit einer Dichtungsschicht (8) in Kontakt steht; unter der Voraussetzung, dass, wenn die Dichtungsschicht (8) einen zweiten Verstärkungsträger (1) umfasst, der mit einem bituminösen Material imprägniert ist, der zweite Verstärkungsträger (1) eine Glasfaser-Vliesmatte, eine Polyester-Vliesmatte, eine verstärkte Glasfasermatte, eine verstärkte Polyestermatte, ein zusammenhaftendes Gelege aus verschiedenen Faserkombinationen oder laminierte Kombinationen davon umfasst; und wenn die Dichtungsschicht (8) keinen zweiten Verstärkungsträger (1) umfasst, der mit einem bituminösen Material imprägniert ist, der erste Verstärkungsträger (5) aus einem verstärkten Gelege in Kombination mit einem Vlies besteht.

2. Wärme reflektierende Dachmembran (7) oder Schindel nach Anspruch 1, wobei die Polyurethan-Polymerkomponente ein Copolymer mit der Acryl-Polymerkomponente bildet.

3. Wärme reflektierende Dachmembran (7) oder Schindel nach Anspruch 1 oder 2, wobei das Pigment $TiO_2$ umfasst.

4. Wärme reflektierende Dachmembran (7) oder Schindel nach einem der Ansprüche 1 bis 3, wobei der erste Verstärkungsträger ein Gewebe oder ein Vliesstoff ist.

5. Wärme reflektierende Dachmembran (7) oder Schindel nach einem der Ansprüche 1 bis 4, wobei die Deckschicht (9) bei -15°C unter den Bedingungen des Standards EN1109 nicht bricht.

6. Wärme reflektierende Dachmembran (7) oder Schindel nach einem der Ansprüche 1 bis 5, wobei der erste Verstärkungsträger (5) und/oder der zweite Verstärkungsträger (5) Glasfasern und/oder Polyesterfasern umfassen.

7. Wärme reflektierende Dachmembran (7) oder Schindel nach einem der Ansprüche 1 bis 6, wobei die Dichtungsschicht (8) des Weiteren eine erste Bitumenschicht (2) an der Oberseite der imprägnierten zweiten Verstärkungsschicht (1) und eine zweite Bitumenschicht (2) an der Unterseite der imprägnierten zweiten Verstärkungsschicht (1) umfasst.

8. Wärme reflektierende Dachmembran (7) oder Schindel nach Anspruch 7, wobei die erste Bitumenschicht (2) und die zweite Bitumenschicht (2) jeweils zwischen 0 und 45 Gewichtsprozent einer polymeren Verbindung umfassen.

9. Wärme reflektierende Dachmembran (7) oder Schindel nach Anspruch 8, wobei die synthetische Polymerverbindung ein oder mehrere Elemente ausgewählt aus der Gruppe bestehend aus amorphem Polypropylen (APP), amorphen Polyalphaolefinen (APAO), thermoplastischen Olefinen (TPO), thermoplastischen Elastomeren (TPE), Styrol-Butadien-Styrol (SBS), Styol-Ethylen-Butadien-Styrol, Naturgummi oder Synthetikgummi umfasst.

10. Verfahren zur Herstellung einer Wärme reflektierenden Deckschicht (9) für eine Dachmembran (7) oder Schindel nach Anspruch 1, wobei das Verfahren den Schritt des Auftragens einer Lackschicht (6) auf einem ersten Verstärkungsträger (5) umfasst, wobei der Verstärkungsträger (5) faserig ist, wobei die Lackschicht (6) ein Bindemittel umfasst, wobei das Bindemittel zwischen 10 und 70 Gewichtsprozent der trockenen Lackschicht bildet, wobei das Bindemittel zwischen 40 und 100 Gewichtsprozent einer Polyurethankomponente und zwischen 0 und 60 Gewichtsprozent einer Acryl-Polymerkomponente umfasst, und wobei das Bindemittel eine $Tg < -10°C$ aufweist, und wobei die Lackschicht (6) des Weiteren Pigmente umfasst, wobei die Pigmente zwischen 5 und 70 Gewichtsprozent der trockenen Lackschicht bilden.

**11.** Verfahren nach Anspruch 10, wobei der erste Verstärkungsträger (5) Glasfasern und/oder Polyesterfasern umfasst.

**12.** Verfahren zur Herstellung einer Wärme reflektierenden Dachmembran (7) oder Schindel, umfassend das Verfahren zur Herstellung einer Wärme reflektierenden Deckschicht (9) nach Anspruch 11 oder 12, des Weiteren umfassend das Pressen des ersten Verstärkungsträgers (5) auf die Oberfläche einer Dichtungsschicht (8), wobei die Temperatur zwischen 150°C und 175°C beträgt.

**13.** Verfahren nach Anspruch 12, wobei die Dichtungsschicht (8) des Weiteren eine erste Bitumenschicht (2) an der Oberseite der imprägnierten zweiten Verstärkungsschicht (1) und eine zweite Bitumenschicht (2) an der Unterseite der imprägnierten zweiten Verstärkungsschicht (1) umfasst.

**14.** Verfahren zur Herstellung einer Wärme reflektierenden Dachmembran (7) oder Schindel, umfassend das Verfahren zur Herstellung einer Deckschicht (9) nach Anspruch 10 oder 11 und des Weiteren umfassend das Auftragen einer Dichtungsschicht (8) auf dem ersten Verstärkungsträger (5) der Wärme reflektierenden Deckschicht (9).

**15.** Verwendung einer Wärme reflektierenden Deckschicht (9), umfassend:

- einen ersten Verstärkungsträger (5), wobei der erste Verstärkungsträger (5) faserig ist, und
- eine Lackschicht (6), wobei die Lackschicht (6) ein Bindemittel umfasst, wobei das Bindemittel zwischen 10 und 70 Gewichtsprozent der trockenen Lackschicht bildet, wobei das Bindemittel zwischen 40 und 100 Gewichtsprozent einer Polyurethan-Polymerkomponente und zwischen 0 und 60 Gewichtsprozent einer Acryl-Polymerkomponente umfasst, wobei das Bindemittel eine Tg < -10°C bei einer Messung unter den Bedingungen von ASTM 1356 aufweist, wobei die Lackschicht (6) des Weiteren Pigmente umfasst, wobei die Pigmente zwischen 5 und 70 Gewichtsprozent der trockenen Lackschicht bilden,

zur Herstellung einer Wärme reflektierenden Dachmembran (7) oder Schindel nach Anspruch 1.

**16.** Verlegen einer Wärme reflektierenden Dachmembran (7) oder Schindel nach einem der Ansprüche 1 bis 9.

## Revendications

**1.** Membrane de couverture pour toiture réfléchissant la chaleur (7) ou bardeau comprenant une couche supérieure réfléchissant la chaleur (9) comprenant .

- un premier support de renfort (5), ledit premier support de renfort (5) étant fibreux, et
- une couche de peinture (6), dans laquelle ladite couche de peinture (6) comprend un liant, ledit liant faisant entre 10 et 70 % du poids de la couche de peinture sèche, dans laquelle ledit liant comprend entre 40 et 100 % en poids d'un composant de polymère de polyuréthanne et entre 0 et 60 % en poids d'un composant de polymère acrylique, dans laquelle ledit liant a un Tg < -10 °C lorsque mesuré sous les conditions ASTM 1356, ladite couche de peinture (6) comprend en outre des pigments, lesdits pigments faisant entre 5 et 70 % en poids de la couche de peinture sèche,

dans laquelle ledit premier support de renfort (5) a sa surface supérieure en contact avec ladite couche de peinture (6) et sa surface inférieure en contact avec une couche de mastic (8) ; avec la clause restrictive que si ladite couche de mastic (8) comprend un second support de renfort (1) imprégné par une matière bitumeuse, ledit second support de renfort (1) comprend une natte de fibres de verre non tissées, une natte de polyester non tissée, une natte renforcée en fibres de verre, une natte renforcée en polyester, un canevas formant voile de diverses combinaisons de fibres ou combinaisons stratifiées de celles-ci ; et, si ladite couche de mastic (8) ne comprend pas de second support de renfort (1) imprégné par une matière bitumeuse, ledit premier support de renfort (5) est composé d'un canevas renforcé en combinaison avec un molleton non tissé.

**2.** Membrane de couverture pour toiture réfléchissant la chaleur (7) ou bardeau selon la revendication 1, dans laquelle ledit composant de polymère de polyuréthanne forme un copolymère avec ledit composant de polymère acrylique.

**3.** Membrane de couverture pour toiture réfléchissant la chaleur ou bardeau selon la revendication 1 ou 2, dans laquelle ledit pigment comprend du $TiO_2$.

**4.** Membrane de couverture pour toiture réfléchissant la chaleur (7) ou bardeau selon l'une quelconque des revendications 1 à 3, dans laquelle ledit premier support de renfort est un tissu tissé ou non tissé.

**5.** Membrane de couverture pour toiture réfléchissant la chaleur (7) ou bardeau selon l'une quelconque des revendications 1 à 4, dans laquelle ladite couche supérieure (9) ne se fissure pas à -15 °C sous les conditions de la norme EN1109.

**6.** Membrane de couverture pour toiture réfléchissant la chaleur (7) ou bardeau selon l'une quelconque des revendications 1 à 5, dans laquelle le premier support de renfort (5) et/ou ledit second support de renfort (5) comprennent des fibres de polyester et/ou des fibres de verre.

**7.** Membrane de couverture pour toiture réfléchissant la chaleur (7) ou bardeau selon l'une quelconque des revendications 1 à 6, dans laquelle ladite couche de mastic (8) comprend en outre une première couche de bitume (2) sur le dessus de ladite seconde couche de renfort imprégnée (1) et une seconde couche de bitume (2) sur le fond de ladite seconde couche de renfort imprégnée (1).

**8.** Membrane de couverture pour toiture réfléchissant la chaleur (7) ou bardeau selon la revendication 7, dans laquelle ladite première couche de bitume (2) et ladite seconde couche de bitume (2) comprennent chacune entre 0 et 45 % en poids d'un composé polymère.

**9.** Membrane de couverture pour toiture réfléchissant la chaleur (7) ou bardeau selon la revendication 8, dans laquelle ledit composé de polymère synthétique comprend un ou plusieurs éléments sélectionnés dans le groupe constitué par du polypropylène amorphe (APP), des poly-alpha-oléfines amorphes (APAO), des oléfines thermoplastiques (TPO), des élastomères thermoplastiques (TPE), du Styrène Butadiène Styrène (SBS), du Styrène Éthylène Butadiène Styrène, du caoutchouc naturel ou du caoutchouc synthétique.

**10.** Procédé de fabrication d'une couche supérieure réfléchissant la chaleur (9) pour une membrane de couverture pour toiture (7) ou bardeau selon la revendication 1, ledit procédé comprenant l'étape d'application d'une couche de peinture (6) sur un premier support de renfort (5), ledit support de renfort (5) étant fibreux, dans lequel ladite couche de peinture (6) comprend un liant, ledit liant faisant entre 10 et 70 % en poids de la couche de peinture sèche, dans lequel ledit liant comprend entre 40 et 100 % en poids d'un composant de polyuréthanne et entre 0 et 60 % en poids d'un composant de polymère acrylique et dans lequel le Tg dudit liant est < -10 °C et dans lequel ladite couche de peinture (6) comprend en outre des pigments, lesdits pigments faisant entre 5 et 70 % en poids de la couche de peinture sèche.

**11.** Procédé selon la revendication 10, dans lequel ledit premier support de renfort (5) comprend des fibres de polyester et/ou des fibres de verre.

**12.** Procédé de fabrication d'une membrane de couverture pour toiture réfléchissant la chaleur (7) ou bardeau, comprenant le procédé de fabrication d'une couche supérieure réfléchissant la chaleur (9) selon la revendication 11 ou 12 et comprenant en outre le pressage dudit premier support de renfort (5) sur la surface d'une couche de mastic (8) dont la température est entre 150 °C et 175 °C.

**13.** Procédé selon la revendication 12, dans lequel ladite couche de mastic (8) comprend en outre une première couche de bitume (2) sur le dessus de ladite seconde couche de renfort imprégnée (1) et une seconde couche de bitume (2) sur le fond de ladite seconde couche de renfort imprégnée (1).

**14.** Procédé de fabrication d'une membrane de couverture pour toiture (7) ou bardeau, comprenant le procédé de fabrication d'une couche supérieure (9) selon la revendication 10 ou 11 et comprenant en outre l'application d'une couche de mastic (8) sur ledit premier support de renfort (5) de ladite couche supérieure réfléchissant la chaleur (9).

**15.** Utilisation d'une couche supérieure réfléchissant la chaleur (9) comprenant :

- un premier support de renfort (5), ledit premier support de renfort (5) étant fibreux, et
- une couche de peinture (6), dans laquelle ladite couche de peinture (6) comprend un liant, ledit liant faisant entre 10 et 70 % en poids de la couche de peinture sèche, dans laquelle ledit liant comprend entre 40 et 100 % en poids d'un composant de polymère de polyuréthane et entre 0 et 60 % en poids d'un composant de polymère acrylique, dans laquelle ledit liant a un Tg < -10 °C lorsque mesuré sous les conditions ASTM 1356, ladite couche de peinture (6) comprend en outre des pigments, lesdits pigments faisant entre 5 et 70 % en poids de la couche de peinture sèche,

pour fabriquer une membrane de couverture pour toiture réfléchissant la chaleur (7) ou bardeau selon la revendication 1.

16. Pose d'une membrane de couverture pour toiture réfléchissant la chaleur (7) ou bardeau selon l'une quelconque des revendications 1 à 9.

Figure1

EP 1 985 775 B1

Figure 2

| | Method of testing | Acrylic<br>*prior art* | pu-acrylic | pu |
|---|---|---|---|---|
| Glass transition temperature (°C) | ASTM | 9 | -28 | -40 |
| Resistance to impact (mm) | EN 12691 | 20 | 10 | 10 |
| Resistance to static loading (kg) | EN 12730 | 10 | 20 | 20 |
| Resistance to tearing (length) | EN 12310-1 | 323 | 314 | 310 |
| Resistance to tearing (width) | EN 12310-1 | 318 | 329 | 326 |
| Tensile force (length) (N) | EN 12311-1 | 1043 | 1287 | 1269 |
| Tensile force (width) (N) | EN 12311-1 | 935 | 1317 | 1315 |
| Elongation (length) (%) | EN 12311-1 | 4 | 15 | 15 |
| Elongation (width) (%) | EN 12311-1 | 4 | 18 | 18 |
| Cracking white coating (°C) | EN 1109 | -6 | -26 | <-30 |
| Cold flexibility membrane (°C) | EN 1109 | -20 | -26 | -26 |

Figure 3

EP 1 985 775 B1

**EP 1 985 775 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1398409 A